# EUROPÄISCHE PATENTSCHRIFT

(11) **EP 1 522 800 B1**
(45) Veröffentlichungstag und Bekanntmachung des Hinweises auf die Patenterteilung: **04.01.2006**
(21) Anmeldenummer: 03022613.8
(22) Anmeldetag: 06.10.2003
(51) Int. Cl.: F24F 13/02, C03C 13/00

(54) **Klima- Bzw. Lüftungskanal**
Air conditioning and ventilation duct
Conduit de climatisation e de ventilation

(43) Veröffentlichungstag der Anmeldung: 13.04.2005
(73) Patentinhaber: SAINT-GOBAIN ISOVER G+H AG, 67059 Ludwigshafen (DE)
(72) Erfinder: Bruer, Ina, 67105 Schifferstadt (DE); Keller, Horst, 69259 Wilhelmsfeld (DE); Bernard, Jean-Luc, 60600 Giencourt Breuil Le Vert (FR); Andersson, Leif, 24131 Eslöv (SE)
(74) Vertreter: GROSSE BOCKHORNI SCHUMACHER

(56) Entgegenhaltungen:
- EP-A- 0 525 816
- EP-A- 0 791 791
- WO-A-01/68546
- WO-A-93/11327
- US-A- 5 975 146
- US-B1- 6 284 684
- US-B1- 6 311 456

## Beschreibung

Die Erfindung betrifft einen Klima- bzw. Lüftungskanal nach dem Oberbegriff des Anspruchs 1.

Derartige Lüftungskanäle sind in der Regel innen und/oder außen zu Dämmzwecken verkleidet, wobei die Verkleidung zumeist aus Mineralwolle gebildet ist. Hierbei ist die Innendämmung in der Regel für die Wärme- und Schalldämmung zuständig und die Außendämmung dient in der Regel dem Brandschutz.

Die Innendämmung des Klima- bzw. Lüftungskanals ist dem strömenden Leitungsfluid, wie Luft, mit ggf. erhöhter Temperatur und - insbesondere bei Strömungsgeschwindigkeiten bis 30 m/s - hohen Kräften durch Pulsation und Verwirbelungen ausgesetzt. Kritische Stellen für diesen Kraftangriff sind einerseits quer zur Strömungsrichtung liegende Stoßstellen zwischen Dämmelementen und andererseits Befestigungsstellen durch Halteteller auf der Dämmstoffoberfläche. An Stoßstellen tendiert die Strömung zum Eindringen in den Stoßbereich und zum Lösen des dortigen Faserverbundes bzw. zum Abheben einer dortigen Kaschierung. An den Haltetellem liegen zwangsläufig Unebenheiten der Strömungsberandung durch niedergedrücktes Dämmmaterial vor, welche zu Krafteinwirkungen durch Wirbelablösungen oder dergleichen führen.

Von daher ist z. B. bei Innendämmung die Festigkeit des Dämmmaterials bzw. des das Dämmmaterial bildenden Faserverbundes und darauf befestigter Elemente wie Kaschierungen von besonderer Bedeutung. Im Bereich der Halteteller führt eine hohe Festigkeit zu einer Minderung des sogenannten "Matratzeneffektes", welcher sich dann einstellt, wenn die Halteteller tief in die Oberfläche des Dämmmaterials einsinken, um die erforderlichen Haltekräfte übertragen zu können.

Für die Innendämmung von Lüftungskanälen wird überwiegend Glaswolle-Material verwendet, welches im allgemeinen feine lange Fasern und bei entsprechendem Bindemittelgehalt relativ hohe Steifheit und Festigkeit aufweist. Derartige Produkte besitzen in der Regel einen λ-Rechenwert nach DIN 18165 zwischen 30 und 40 mW/mK mit einer relativ geringen Rohdichte von unter 25 kg/m³. Als Bindemittel wird vornehmlich Melaminharz wegen der Frage der Brennbarkeit (z.B Baustoffklasse A1/A2) verwendet, während sonst bei Mineralfaser-Produkten aus preislichen Gründen bevorzugt Phenol-Formaldehydharz zum Einsatz kommt .

Die für den Brandschutz wesentliche Anforderung an die Außendämmung von Klima- bzw. Lüftungsleitungen bezieht sich insbesondere darauf, dass der Lüftungskanal noch über eine bestimmte Zeitspanne hinweg im Brandfall körperlich unversehrt bleibt. Überdies ist bei Wanddurchführungen darauf zu achten, dass kein zu schneller Übergriff des Brandes von einem Raum auf den Nachbarraum mit zu schnellem, hohem Temperaturanstieg in dem benachbarten Raum erfolgt.

Die Brandschutzanforderungen an derartige Systeme werden daher in sogenannte Feuerwiderstandsklassen oder dergl. eingeteilt. So bedeutet die Feuerwiderstandsklasse L30, dass die Leitungskonstruktion unter genormten Versuchsbedingungen einer Beanspruchung durch Feuer für 30 Minuten widerstehen kann. Je nach Anwendung sind beispielsweise die Feuerwiderstandsklassen L30, L60 oder L90 gefordert.

Insbesondere zur Erzielung höherer Feuerwiderstandsklassen ist als Dämnunaterial für derartige Leitungskanäle der Einsatz von Steinwolle erforderlich, deren Schmelzpunkt nach DIN 4102, Teil 17 bei 1.000 °C liegt und die somit sich gegenüber Glaswolle durch eine höhere Temperaturbeständigkeit auszeichnet. Derartige Steinwolle wird üblicherweise im sogenannten Düsenblasverfahren oder mit externer Zentrifugierung, wie dem sogenannten Kaskaden-Schleuderverfahren, erzeugt. Dabei entstehen relativ grobe Fasern mit einem mittleren geometrischen Durchmesser größer 4 bis 12 µm von relativ geringer Länge. Als Bindemittel wird in der Regel Phenol-Formaldehydharz verwendet. Aufgrund der Herstellung fällt weiterhin ein erheblicher Anteil an unzerfasertem Material an, das in Form sogenannter "Perlen" mit einer Partikelgröße von mindestens 50 µm im Produkt vorliegt und am Gewicht, nicht aber an der gewünschten Dämmwirkung, teilnimmt. Der übliche Anteil an "Perlen" liegt hierbei zwischen 10 und 30 Gew.-%.

Aufgrund der gegenüber Glaswolle gröberen Faserstruktur weist herkömmliche Steinwolle bei gleichen λ-Rechenwerten und gleicher Dämmdicke eine signifikant höhere Rohdichte und somit auch höheres Gewicht auf. Auch weist die herkömmliche Steinwolle bei gleichem λ-Rechenwert und gleicher Rohdichte wie herkömmliche Glaswolle eine signifkant höhere Dämmdicke und somit ein wesentliches größeres Volumen auf.

Ein charakteristisches Unterscheidungsmerkmal zwischen Glas- und Steinwolle als Untergruppen der Gattung Mineralwolle besteht im Alkali/Erdalkali-Verhältnis der Zusammensetzung, das bei Steinwolle < 1 und bei Glaswolle > 1 ist. Dies bedeutet, dass Steinwolle einen hohen Anteil CaO + MgO von beispielsweise 20 bis 30 Gew.-% hat und einen relativ niedrigen Anteil von Na₂O + K₂O von beispielsweise etwa 5 Gew.-%. Glaswolle hingegen hat in der Regel Erdalkalibestandteile von beispielsweise etwa 10 Gew.-% und Alkalibestandteile von über 15 Gew.-%. Diese Zahlen stellen insbesondere charakteristische nichtbiopersistente, also biolösliche Zusammensetzungen dar.

Mit innerer Zentrifugierung im Schleuderkorbverfahren hergestellte Mineralfasern mit einer vergleichsweise hohen Temperaturbeständigkeit sind aus der EP 0 551 476, der EP 0583 792, der WO 94/04468, sowie der US 6,284,684 bekannt, auf die wegen weiterer Einzelheiten insoweit ausdrücklich Bezug genommen wird.

Vor diesem Hintergrund liegt der Erfindung die Aufgabe zugrunde, einen Klima- bzw. Lüftungskanal zu schaffen, der vergleichsweise dünnwandig und/oder gewichtsmäßig leicht ausgebildet ist und gleichwohl die normativen Anforderungen an Schall-, Wärme- und Brandschutz erfüllt. Insbesondere sollen die für die Innen- und/oder Außenverkleidung vorgesehenen Dämmelemente für diese Leitungen geeignet sowie ausreichend fest und stabil sein, um insbesondere den Belastungen infolge des durchströmenden Mediums über lange Betriebszeiten sicher Stand halten zu können.

Diese Aufgabe wird erfindungsgemäß für einen Klima- bzw. Lüftungskanal durch die Merkmale des Anspruchs 1 gelöst.

Nach Maßgabe der Erfindung wird dies durch das gezielte Zusammenwirken mehrerer Faktoren erreicht, nämlich Auslegung der Fasern auf einen mittleren geometrischen Faserdurchmesser ≤4 µm und Einstellung der Rohdichte der Mineralfasern je nach Feuerwiderstandsklasse in einem Bereich von 20 bis 120 kg/m³ sowie einer Bindemittelzugabe für die Aushärtung der Mineralfasern in der Form einer Platte von 4 % bis 7 Gew.-%, bezogen auf die Fasermasse des Dämmelements oder in der Form einer Drahtnetzmatte von größer 0,5 bis 1 Gew.-%. Zudem soll die Zusammensetzung der Mineralfasern des Dämmelements ein Alkali/Erdalkali-Massenverhältnis von < 1 aufweisen. Durch die fein ausgelegte Mineralfaser mit einem mittleren geometrischen Faserdurchmesser ≤4 µm ergibt sich eine Faserstruktur, bei der bei gleicher Rohdichte wie bei herkömmlichen Steinwollefasern wesentlich mehr Fasern in der Struktur vorhanden sind und damit auch mehr Kreuzungspunkte für den Faserverbund. Bei gleichem Bindemitteleintrag wie bei herkömmlicher Steinwolle reduziert sich aufgrund der größeren Anzahl von Kreuzungspunkten und der Konzentration des Bindemittels an diesen Punkten der nicht zu einer Bindung beitragende Anteil des Bindemittels wesentlich, wodurch ein Faserverbund resultiert, der zu einer vergleichsweise steiferen Auslegung einer ausgehärteten Mineralfaserplatte führt. Ferner kann aufgrund der feineren Faserstruktur des erfindungsgemäßen Dämmelements dieses mit einer Rohdichte je nach normativer Feuerwiderstandsklasse oder dergl. im Bereich von 20 bis 120 kg/m³ und somit gegenüber Dämmelementen aus herkömmlicher Steinwolle, welche üblicherweise Rohdichten zwischen 45 und 180 kg/m³ aufweisen, gewichtsmäßig leichter ausgelegt werden. Damit kann bei gleichbleibender absoluter organischer Brandlast, d.h. Bindemitteleintrag, dementsprechend ein größerer relativer Bindemittelanteil eingestellt werden, was zur Folge hat, dass die Platte vergleichsweise wesentlich steifer wird. Andererseits kann bei der erfindungsgemäßen Dämmplatte eine vorgegebene Steifigkeit und Stabilität auch mit einem vergleichsweise geringerem absoluten Bindemitteleintrag erreicht werden, wodurch wiederum die durch das zumeist organische Bindemittel eingetragene Brandlast entsprechend reduziert wird. Durch die Verringerung des Dämmgewichtes verringert sich gleichzeitig vorteilhaft auch die Traglast des Kanals, was insbesondere bei einem freihängenden Kanal von wesentlicher Bedeutung ist, da diese statisch aufgefangen werden muss.

Bei speziellen Geometrien eines Klima- bzw. Lüftungskanals kann es sich als vorteilhaft erweisen, zur Außenverkleidung erfindungsgemäße Drahtnetzmatten aufgrund ihrer Flexibilität mit einem Bindemittelgehalt von < 1 Gew.-% einzusetzen. Drahtnetzmatten erlangen ihre mechanische Stabilität durch ein mit der Faserstruktur verwebtes Drahtgeflecht, weswegen nur ein geringer Bindemittelgehalt erforderlich ist, wodurch die Gesamtbrandlast wesentlich verringert wird. Gegenüber Drahtnetzmatten aus herkömmlicher Steinwolle mit vergleichbarem Bindemittelgehalt ist eine erhebliche Gewichtseinsparung entscheidend.

Dagegen ist bei plattenförmigen Dämmelementen ein Bindemitteleintrag im Bereich von 4 bis 6 Gew.-% bevorzugt vorgesehen, um verfestigte Dämmelemente zu erhalten, die bei einem Einsatz als Innenverkleidungen die Gefahr des sogenannten "Matratzeneffekts" herabsetzen. Gleichzeitig wird eine lokale Auflösungserscheinung der Fasern unter den Pulsationen und Verwirbelungen eines schnell strömenden Mediums vorgebeugt, was sich durch eine vorteilhafte Abreißfestigkeit ausdrückt.

Zugleich erhöht sich infolge der feinausgelegten Faserstruktur der für die Dämmwirkung wesentliche Luftanteil innerhalb des Dämmelements, was auch zu einer entsprechenden Erhöhung des Dämmeffekts bei Innen- wie Außenverkleidungen führt. Schließlich ergibt sich aufgrund der feineren Auslegung der Fasern ein vorteilhafter λ-Rechenwert gemäß DIN 18165 von ≤35 mW/mK bei gleichzeitiger geringer Rohdichte.

Dieser λ-Rechenwert lässt sich vorteilhaft bei Außenverkleidungen bei einer Feuerwiderstandsklasse L30 oder dergl. mit Rohdichten zwischen 20 und 40 kg/m³, vorzugsweise 30 kg/m³, bei einer Feuerwiderstandsklasse L60 oder dergl. mit Rohdichten zwischen 60 und 80 kg/m³, vorzugsweise 70 kg/m³, und bei einer Feuerwiderstandsklasse L90 oder dergl. mit Rohdichten zwischen 90 und 120 kg/m³, vorzugsweise 110 kg/m³, verwirklichen. Bei Innenverkleidungen lässt sich dieser λ-Rechenwert vorteilhaft durch mindestens eine Rohdichte entsprechend dem Rohdichtebereich der Feuerwiderstandsklasse L30 verwirklichen, wobei zur Einhaltung der schallschutztechnischen Anforderungen das erfindungsgemäße Dämmelement einen längenbezogenen Strömungswiderstand nach DIN EN ISO 9053 von > 15 kPas/m² aufweist.

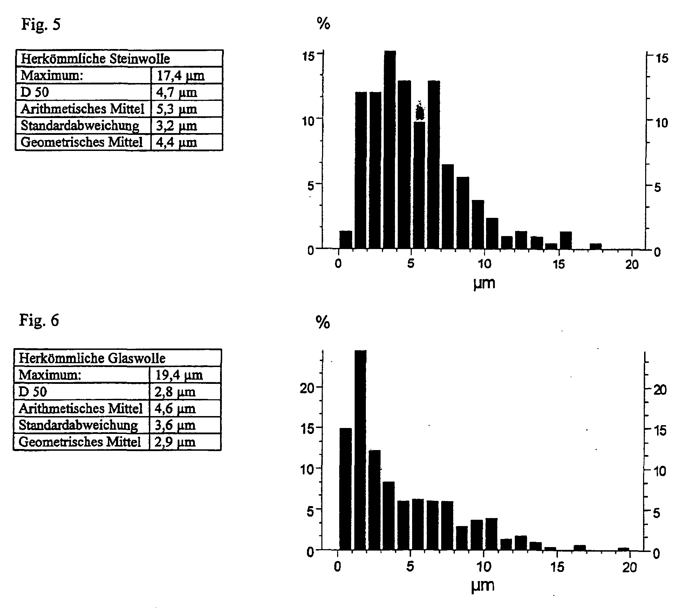

Besonders bevorzugt ist eine Faserfeinheit definiert durch einen mittleren geometrischen Faserdurchmesser von 3 µm. Der für die Faserfeinheit verantwortliche geringe mittlere geometrischen Durchmesser bestimmt sich aus der Häufigkeitsverteilung des Durchmessers der Fasern. Die Häufigkeitsverteilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 5, 6 und 7).

Schließlich ist es zweckmäßig, dass im Falle der Verwendung des erfindungsgemäßen Dämmelements als Innenverkleidung, dieses mit einem abriebfesten, akustisch transparenten Belag wie ein Glasvlies und im Falle einer Außenverkleidung mit einem diffussionsdichten Belag wie eine Aluminiumfolie kaschiert ist. Zweckmäßigerweise beträgt der Schmelzpunkt des erfindungsgemäßen Dämmelements vorteilhaft ≥1.000 °C nach DIN 4102, Teil 17.

Um ein Dämmelement zu erhalten, dass den Anforderungen an Schall-, Wärme- und Brandschutz im Bereich Klima- bzw. Lüftungskanäle in einem Produkt erfüllt, ist es zweckmäßig, dass eine Glaszusammensetzung verwendet wird, deren Schmelze bei einer inneren Zentrifugierung im Schleuderkorb-Verfahren mindestens eine Temperatur des Schleuderkorbs von 1.100 °C aufweist. Dementsprechend muss der Schleuderkorb entsprechend temperaturbeständig ausgebildet sein. Gleichzeitig erhält man positiv eine feine Faserstruktur, die im Gegensatz zu herkömmlicher Steinwolle praktisch perlenfrei ist.

Vorteilhaft sind die Dämmelemente aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Dämmelemente bei Herstellung, Verarbeitung, Nutzung und Entsorgung gewährleistet ist.

Nachfolgend ist in einer Tabelle 1 die bevorzugte Zusammensetzung der Mineralfasern einer erfindungsgemäßen Dämmelemente bereichsweise in Gew.-% angegeben.

**Tabelle 1**

| | | | |
|---|---|---|---|
| SiO₂ | 39 - 55 % | vorzugsweise | 40 - 52 % |
| Al₂O₃ | 16 - 27 % | vorzugsweise | 16 - 26 % |
| CaO | 9,5 - 20 % | vorzugsweise | 10-18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

Schließlich ist es zweckmäßig, die Dämmelemente zum Zweck einer platzsparenden Verpackung so auszulegen, dass sie bis zu einer maximalen Rohdichte von 50 kg/m³ mindestens im Verhältnis 1:2, insbesondere bis zu einer maximalen Rohdichte von 30 kg/m³ mindestens im Verhältnis 1:3 komprimierbar sind, ohne dass dadurch ihr Eigenschaftsprofil verändert wird.

Ferner ist es auch möglich, aufgrund der hervorragenden mechanischen Eigenschaften der erfindungsgemäßen Dämmelemente bei vergleichsweise geringem Bindemittelanteil zwischen 4 und 7 Gew.-% einen Klima- bzw. Lüftungskanal in Form einer selbsttragenden Konstruktion herzustellen, d.h. dass dieser ausschließlich aus durch mit Bindemittel verfestigten plattenförmigen Dämmelementen gebildet ist. Vorteilhaft sind die Dämmelemente integraler Bestandteil einer um Falze knickbaren Platte, wie in den Schutzrechten EP 0 791 791, EP 1 339 649 und US 6,311,456 beschrieben ist, auf welche ausdrücklich Bezug genommen wird.

Hierbei ist es zweckmäßig, die Innen- und Außenfläche des so gebildeten Kanals mit einem diffusionsdichten Belag wie einer Aluminiumfolie oder dergl. zu versehen, wobei dieser Belag gleichzeitig nicht unwesentlich zur Stabilität des sich selbst tragenden Kanals beiträgt.

Durch die synergistisch zusammenwirkenden erfindungsgemäßen Maßnahmen ergibt sich somit ein Klima- bzw. Lüftungskanal, der bei geringer Dicke der Dämmelemente und geringem Gewicht infolge verminderter Rohdichte niedrige λ-Rechenwerte aufweist und in vorteilhafter Weise den Anforderungen an Schall-, Wärme- und Brandschutz in einem Produkt gerecht wird. Infolge der verminderten Rohdichte resultiert ein geringes Gewicht des Dämmelements bei gleichwohl gutem Dämmeffekt. Infolge des hohen Bindemittelwirkungsgrads ergibt sich auch eine hohe Steifigkeit, wobei infolge des gewählten Alkali/Erdalkali-Massenverhältnisses von < 1 sich das Gebilde auch durch hohe Temperaturbeständigkeit auszeichnet. Die gebundenen Fasern gemäß der Erfindung besitzen eine hohe mechanische Elastizität und hohe Temperaturbeständigkeit im Vergleich zu Glaswolle. Die geringe Rohdichte gepaart mit der außerordentlichen hohen Festigkeit führt so zu einem leichtgewichtigen Dämmmaterial, welches weitgehend formstabil ist und somit leicht, d.h. enmüdungsfrei montiert werden kann. Insbesondere weist das Dämmelement gemäß der Erfindung die selben Brandschutzqualitäten wie herkömmliche Steinwolle auf, so dass zu den hervorragenden mechanischen Eigenschaften und dem geringen Gewicht auch die volle Brandschutzwirkung herkömmlicher Steinwolle-Dämmelemente zum Tragen kommt. Somit schafft die Erfindung eine Symbiose zwischen Glaswolle und Steinwolle und kombiniert geschickt deren vorteilhafte Eigenschaften, indem das Dämmelement auf glaswollartige Faserstruktur bei gleichwohl hoher Temperaturbeständigkeit ausgelegt ist.

Im Folgenden wird die Erfindung näher anhand mehrerer Ausführungsbeispiele unter Bezugnahme auf die Zeichnung beschrieben. Dabei zeigen
- Fig. 1: eine teilweise Schnittansicht des rechteckförmigen Lüftungskanals mit schematisch veranschaulichter Innendämmung und Außendämmung,
- Fig. 2: eine Darstellung einer mit Kreis in Fig. 1 gekennzeichneten Einzelheit zur beispielhaften Erläuterung der Befestigung der Verkleidung und
- Fig. 3: eine vereinfachte perspektivische Darstellung eines sich selbst tragenden Lüftungskanales,
- Fig. 4: ein Diagramm eines Vergleichsversuchs im Rahmen einer Wärmeleitfähigkeitsprüfung bei 400°C,
- Fig. 5: ein typisches Faserhistogramm einer herkömmlichen Steinwolle,
- Fig. 6: ein typisches Faserhistogramm einer herkömmlichen Glaswolle, und
- Fig. 7: ein typisches Faserhistogramm der erfindungsgemäßen Mineralwolle.

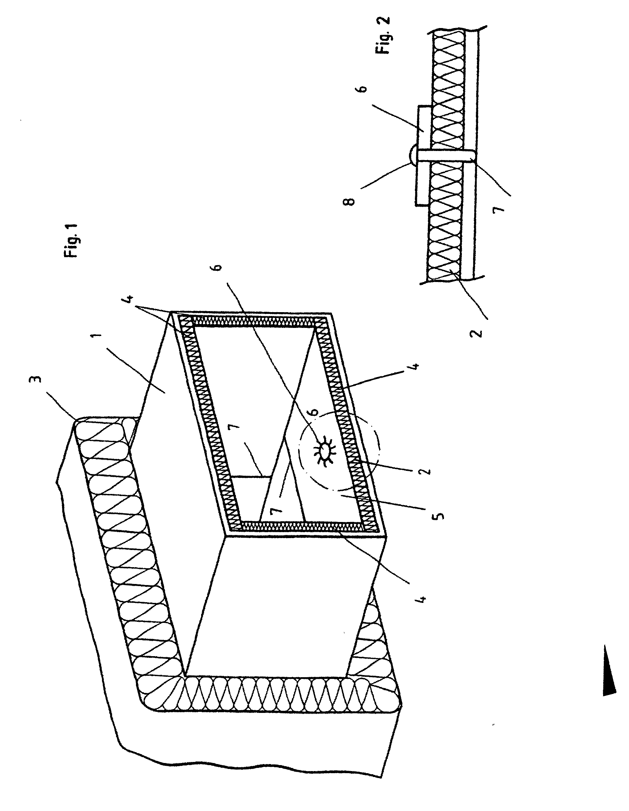

In Fig. 1 ist mit 1 ein im Querschnitt rechteckförmiger Lüftungskanal aus Stahlblech bezeichnet. Dieser ist mit einer insgesamt mit 2 bezeichneten Innendämmung und mit einer insgesamt mit 3 bezeichneten Außendämmung versehen.

Die Innendämmung 2 besteht aus plattenförmigen Mineralwolledämmelementen 4 mit einer Kaschierung 5 beispielsweise aus Glasvlies an der der Strömung zugewandten Seite der Innendämmung. Die Kaschierung schützt die oberflächenseitigen Fasern und ermöglicht eine widerstandsarme Führung des Strömungsmediums.

Im dargestellten Ausführungsbeispiel weisen die Mineralwolledämmelemente 4 eine Rohdichte von 30 kg/m³ bei einem Gehalt an organischem Bindemittel in Form von Phenol-Formaldehydharz von 5 Gew.-% (trocken, bezogen auf die Fasermasse) auf. Der mittlere geometrische Faserdurchmesser beträgt 3,2 µm, wobei das Produkt einen λ-Rechenwert von 35 mW/mK und bei einem längenbezogenen Strömungswiderstand von 17 kPas/m² eine Dicke von 20 mm hat.

Das Fasermaterial der plattenförmigen Mineralwolledämmelemente 4 ist durch innere Zentrifugierung im Schleuderkorb-Verfahren hergestellt, wobei letztere durch Halteteller 6 an der Wand des Leitungskanals befestigt sind.

Infolge des hohen Bindemittelwirkungsgrades des Phenol-Formaldehydharzes auf die Fasern und die hohe mechanische Elastizität der einzelnen Fasern ergibt sich ein Mineralwolledämmelement, das in seiner Struktur ähnlich einem ebenfalls durch innere Zentrifugierung hergestellten Glaswolledämmelement ist, jedoch deutlich fester und steifer ist, und das erforderlichenfalls einen Schmelzpunkt von größer 1000°C besitzt. Dadurch ist nicht nur die Kaschierung 5 sicher an der Oberseite des Dämmelementes 4 gehalten und es besteht keine Gefahr, dass diese im Bereich von Querstößen 7 unter den Pulsationen und Verwirbelungen des ggf. sehr schnell strömenden Mediums abgelöst wird. Weiterhin erzeugen die Halteteller 6 die erforderliche Haltekraft, ohne weit in das Material einzusinken, so dass der eine glatte Strömungswand beeinträchtigende "Matratzeneffekt" minimiert und im Prinzip ausgeschaltet ist.

Fig. 2 zeigt in rein schematischer Darstellung Details der Befestigung der Innendämmung 2. Hierzu sind an dem aus Stahlblech hergestellten Lüftungskanal 1 mehrere Stifte 7 angeordnet (nur einer ist dargestellt) und hier durch Schweißen am Lüftungskanal befestigt. Es sit auch möglich, die Stifte am Lüftungskanal anzukleben. Auf diesen Stiften wird die Innendämmung aufgedrückt und es wird dann von oben, d. h. vom Inneren des Lüftungskanals her, jeweils ein Halteteller 6 aufgesetzt, der im vorliegenden Fall über ein Schraubteil 8 festgesetzt bzw. festgelegt ist, wobei alternativ auch eine Aufschlagniet möglich ist. Die leichte Eindellung der Innendämmung 2 an ihrer Innenfläche dient nur zur Illustrierung des sogenannten "Matratzeneffekts", der bei herkömmlichen Dämmungen auftreten kann, der jedoch bei den erfindungsgemäßen Dämmplatten weitgehend vermieden wird infolge von deren steifer Auslegung.

Die Außendämmung 3 ist im dargestellten Ausführungsbeispiel durch eine Drahtnetzmatte gebildet, die in üblicher Weise mit einem hier nicht dargestellten Mattenhalterhaken oder dergl. von außen am Lüftungskanal 1 befestigt ist.

Im Falle einer zweilagigen Anordnung der Außendämmung 3, die bei Ausführungen entsprechend den Feuerwiderwiderstandsklassen L30, L60 oder L90 gemäß DIN 4102 Teil 4 vorgeschrieben ist, sind die Stöße der Dämmelemente in nicht näher dargestellter Weise gegeneinander versetzt angeordnet, so dass Flammen wie Hitze nicht an einer sich öffnenden Stoßfuge bis zum Blechmantel des Lüftungskanals 1 vorstoßen können. Die Drahtnetzmatte weist im dargestellten Ausführungsbeispiel die selben Parameter für Rohdichte und mittleren geometrischen Faserdurchmesser auf wie die der Innendämmung 2, wobei der organische Bindemittelanteil hier nur 0,8 Gew.-% beträgt.

Anstelle einer Drahtnetzmatte für die Außenverkleidung, ist es auch möglich, diese mit einzelnen plattenförmigen Dämmelementen, deren Faseraufbau äquivalent zur Innendämmung ist, auszuführen. Derartige plattenförmige Dämmelemente besitzen die gleiche Rohdichte und Dicke wie die im Ausführungsbeispiel beschriebene Drahtnetzmatte, da diese beiden Parameter den Feuerwiderstand maßgeblich beeinflussen.

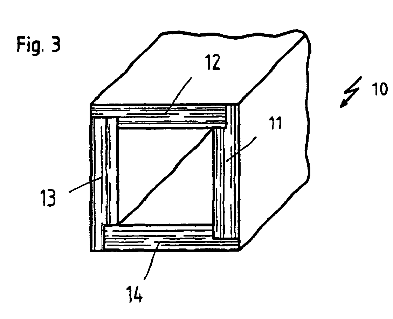

Schließlich ist in Fig. 3 in vereinfachter perspektivischer Darstellung schematisch ein sich selbst tragender Lüftungskanal 10 dargestellt, der aus einzelnen Dämmelementen 11 bis 14 an ihren Stößen über Falze mit einem rechteckförmigen Querschnitt zusammengesetzt ist. Die Dämmelemente 11 bis 14 bestehen aus einer Glaszusammensetzung gemäß Tabelle 2 und sind auf der Innen- und Außenseite jeweils mit einer Aluminiumfolie kaschiert, und zwar derart, dass die Alumiumfolie auf der Außenseite umlaufend angeordnet ist.

Die Zusammensetzung in Gew.-% der konventionellen, also aus herkömmlicher Steinwolle gebildeten Dämmelemente, sowie aus herkömmlicher Glaswolle gebildeten Dämmelemente und der erfindungsgemäßen Dämmelemente ergibt sich aus Tabelle 2, wobei die herkömmliche Steinwolle sowie das erfindungsgemäße Dämmelement einen Schmelzpunkt von mindestens 1000°C nach DIN 4102 Teil 17 aufweisen.

**Tabelle 2**

| Material | herkömmliche Steinwolle | herkömmliche Glaswolle | erfindungsgemäße Dämmelemente |
|---|---|---|---|
| SiO₂ | 57,2 | 65 | 41,2 |
| Al₂O₃ | 1,7 | 1,7 | 23,7 |
| Fe₂O₃ | 4,1 | 0,4 | 5,6 |
| TiO₂ | 0,3 | | 0,7 |
| CaO | 22,8 | 7,8 | 14,4 |
| MgO | 8,5 | 2,6 | 1,5 |
| Na₂O | 4,6 | 16,4 | 5,4 |
| K₂O | 0,8 | 0,6 | 5,2 |
| B₂O₃ | | 5 | |
| P₂O₅ | | 0,15 | 0,75 |
| MnO | | 0,3 | 0,6 |
| SrO | | | 0,5 |
| BaO | | | 0,34 |
| Total | 100 | 99,95 | 99,89 |

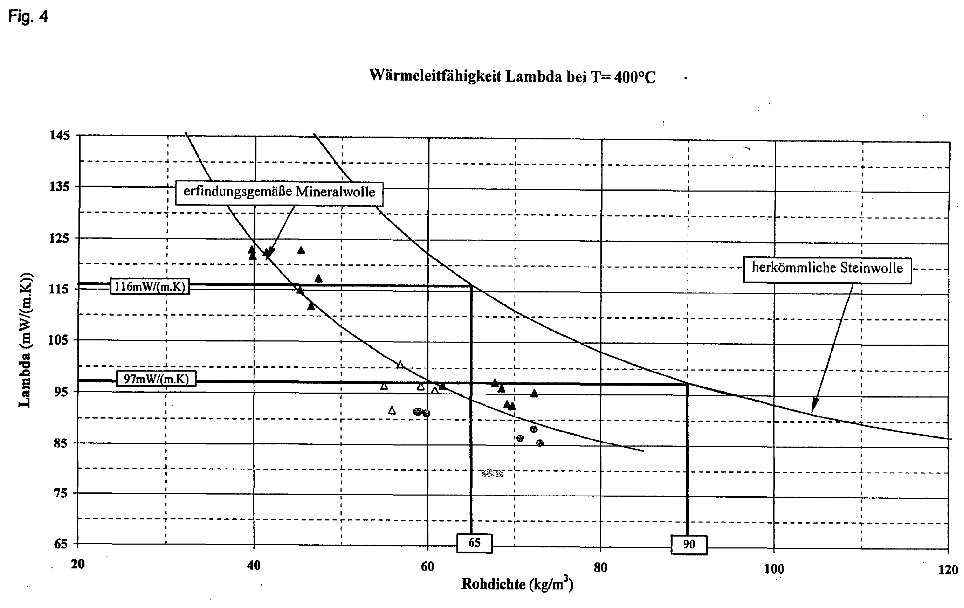

In Fig. 4 ist die Meßreihe eines Wärmeleitfähigkeitsversuches bei 400°C über der Rohdichte in Form eines Diagramms dargestellt. Die Meßergebnisse wurden nach DIN 52612-1 mit einem sogenannten Zweiplattengerät ermittelt.

Aus diesem Diagramm ist in einfacher Weise ersichtlich, welches Einsparpotential bei Verwendung der erfindungsgemäßen Mineralwolle gegenüber herkömmlicher Steinwolle möglich ist, und zwar beispielhaft für zwei Rohdichten 65 und 90 kg/m³. Die gleiche Wärmeleitfähigkeit von 116 mW/mK, welche bei herkömmlicher Steinwolle mit einer Rohdichte von 65 kg/m³ erreicht wird, wird mit der erfindungsgemäßen Mineralwolle bereits bei einer Rohdichte von etwa 45 kg/m³ erhalten, d.h. mit einer Gewichtseinsparung von ca. 31 %. Analog ergibt sich bei einer Rohdichte von 90 kg/m³ der herkömmlichen Steinwolle durch die erfindungsgemäße Mineralwolle eine Gewichtseinsparung von ca. 33 %.

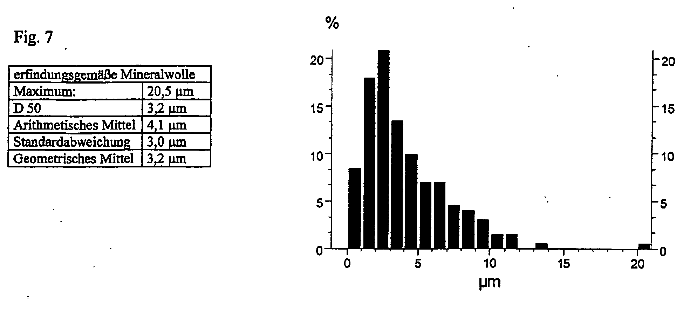

Schließlich zeigen die Fig. 5 und 6 für die in der Beschreibung erwähnte herkömmliche Steinwolle und herkömmliche Glaswolle jeweils ein typisches Faserhistogramm der Dämmelemente, wobei Fig. 7 ein solches der Fasern der erfindungsgemäßen Dämmelemente angibt.

In Bezug auf die bevorzugte Zusammensetzung der Mineralfasern gilt zweckmäßigerweise, dass für den Fall, dass Al₂O₃ in einem Gehalt von weniger als 22 % vorliegt, der Anteil von MgO mindestens 2 %, insbesondere 2 bis 5 % beträgt. Ferner gilt zweckmäßigerweise für den Fall, dass bei einem Gehalt von Al₂O₃ ≥ 22 % der Anteil an MgO 1 bis 4 %, vorzugsweise 1 bis 2 % beträgt.

## Patentansprüche

1. Klima- bzw. Lüftungskanal mit einer Innen- und/oder Außenverkleidung (2, 3) aus jeweils mindestens einem Dämmelement (4) mit insbesondere einer Temperaturbeständigkeit zur Einhaltung der Anforderungen der normativen Feuerwiderstandsklassen oder dergl. in Form einer durch ein Bindemittel verfestigten Platte oder einer Drahtnetzmatte aus in einem physiologischen Milieu löslichen Mineralfasern, wobei die Innen- und/oder Außenverkleidung (2, 3) aus mehreren Dämmelementen gebildet ist, die in der Richtung der Längsachse des Klima- bzw. Lüftungskanals mindestens einlagig anordenbar und an diesem befestigbar sind, **dadurch gekennzeichnet, dass** die Zusammensetzung der Mineralfasern des Dämmelements (4) ein Alkali/Erdalkali-Massenverhältnis von < 1 aufweist, und dass die Faserstruktur des Dämmelements (4) bestimmt ist durch einen mittleren geometrischen Faserdurchmesser ≤ 4 µm, eine Rohdichte im Bereich von 20 bis 120 kg/m³ und einen Anteil des Bindemittels bezogen auf die Fasermasse des Dämmelements (4) in Form einer Platte im Bereich von 4 bis 7 Gew.-% oder in der Form einer Drahtnetzmatte im Bereich von 0,5 bis 1 Gew.-%.

2. Kanal nach Anspruch 1, **dadurch gekennzeichnet, dass** das Bindemittel ein organisches Bindemittel ist, wie Phenol-Formaldehydharz.

3. Kanal nach Anspruch 1 oder 2, **dadurch gekennzeichnet, dass** der Anteil des Bindemittels bezogen auf die Fasermasse des Dämmelements (4) in Form einer Platte im Bereich von 4 und 6 Gew.-%. liegt.

4. Kanal nach einem der vorhergehenden Ansprüche, **dadurch gekennzeichnet, dass** die Rohdichte der Außenverkleidung bei einer Feuerwiderstandsklasse L30 oder dergl. 20 bis 40 kg/m³, vorzugsweise 30 kg/m³, bei einer Feuerwiderstandsklasse L60 oder dergl. 60 bis 80 kg/m³, vorzugsweise 70 kg/m³, und bei einer Feuerwiderstandsklasse L90 oder dergl. 90 bis 120 kg/m³, vorzugsweise 110 kg/m³, ist.

5. Kanal nach einem der vorhergehenden Ansprüche, **dadurch gekennzeichnet, dass** die Rohdichte der Innenverkleidung (2) mindestens einer Rohdichte der Feuerwiderstandsklasse L30 oder dergl. entspricht und einen längenbezogenen Strömungswiderstand nach DIN EN ISO 9053 von > 15 kPas/m² aufweist.

6. Kanal nach einem der vorhergehenden Ansprüche, **dadurch gekennzeichnet, dass** das Dämmelement (4) einen λ-Rechenwert von ≤ 35 mW/mK aufweist.

7. Kanal nach einem der vorhergehenden Ansprüche, **dadurch gekennzeichnet, dass** die Innenverkleidung (2) aus einem abriebfesten, akustisch transparenten Belag wie ein Glasvlies oder dergl. und die Außenverkleidung aus einem diffusionsdichten Belag wie einer Aluminiumfolie oder dergl. kaschiert ist.

8. Kanal nach einem der vorhergehenden Ansprüche, **dadurch gekennzeichnet, dass** das Dämmelement (4) einen Schmelzpunkt nach DIN 4102, Teil 17 von ≥1.000 °C aufweist.

9. Kanal nach einem der vorhergehenden Ansprüche, **dadurch gekennzeichnet, dass** die Mineralfasern des Dämmelements (4) durch eine innere Zentrifugierung im Schleuderkorbverfahren mit einer Temperatur am Schleuderkorb von mindestens 1.100 °C hergestellt sind.

10. Kanal nach einem der vorhergehenden Ansprüche, **dadurch gekennzeichnet, dass** die Mineralfasern des Dämmelements (4) hinsichtlich ihrer Löslichkeit in einem physiologischen Milieu gemäß den Anforderungen der europäischen Richtlinie 97/69/EG und/oder den Anforderungen der deutschen Gefahrstoffverordnung Abs. IV Nr. 22 entsprechen.

11. Kanal nach einem der vorhergehenden Ansprüche, **dadurch gekennzeichnet, dass** die Dämmelemente (4) zum Zwecke ihrer Verpackung bis zu einer maximalen Rohdichte von 50 kg/m³ mindestens im Verhältnis 1:2, insbesondere bis zu einer maximalen Rohdichte von 30 kg/m³ mindestens im Verhältnis 1:3 komprimierbar sind.

12. Klima- bzw. Lüftungskanal nach einem der vorherigen Ansprüche, **dadurch gekennzeichnet, dass** dieser ausschließlich aus durch mit Bindemittel verfestigten plattenförmigen Dämmelementen selbsttragend gebildet ist, die auf ihrer Innen- und Außenfläche eine Kaschierung (5) aufweisen.

13. Kanal nach Anspruch 12, **dadurch gekennzeichnet, dass** die Innen- und Außenkaschierung (5) aus einem diffusionsdichten Belag wie einer Aluminiumfolie oder dergl gebildet ist.

14. Kanal nach Anspruch 12 oder 13, **dadurch gekennzeichnet, dass** die Dämmelemente (4) an ihren Stößen über Falze miteinander rechteckförmig z.B. zu einem Quadrat miteinander verbunden sind.

15. Dämmelement (4) für die Verwendung als Innen- und/oder Außenverkleidung (2, 3) in einem Klima- bzw. Lüftungskanal, **dadurch gekennzeichnet, dass** die Zusammensetzung der Mineralfasern des Dämmelements (4) ein Alkali/Erdalkali-Massenverhältnis von < 1 aufweist, und dass die Faserstruktur des Dämmelements (4) bestimmt ist durch einen mittleren geometrischen Faserdurchmesser ≤ 4 µm, eine Rohdichte im Bereich von 20 bis 120 kg/m³ und einen Anteil des Bindemittels bezogen auf die Fasermasse des Dämmelements (4) in Form einer Platte im Bereich von 4 bis 7 Gew.-% oder in der Form einer Drahtnetzmatte im Bereich von 0,5 bis 1 Gew.-%.

16. Dämmelement nach Anspruch 15, **gekennzeichnet durch** folgende Bereiche der chemischen Zusammensetzung der Mineralfasern in Gew.-%:
| | | | |
|---|---|---|---|
| SiO₂ | 39-55 % | vorzugsweise | 40 - 52 % |
| Al₂O₃ | 16 - 27 % | vorzugsweise | 16 - 26 % |
| CaO | 9,5 - 20 % | vorzugsweise | 10 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 -13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

## Claims

1. An air-conditioning or ventilating duct with an internal and/or external lining (2, 3) comprising at least one insulating element (4) with, in particular, a temperature resistance to comply with the requirements of the normative fire-resistant classes or the like in the form of a plate reinforced by a bonding agent or a wire mesh mat comprising mineral fibres soluble in a physiological medium, the internal and/or external lining (2, 3) being constituted by a plurality of insulating elements, which may be arranged in at least one layer in the direction of the longitudinal axis of the air-conditioning or ventilating duct and may be secured to it, **characterised in that** the composition of the mineral fibres of the insulating element (4) has an alkali/alkaline earth mass ratio of < 1 and that the fibre structure of the insulating element (4) is determined by a mean geometrical fibre diameter ≤ 4µm, a gross density in the range of 20 to 120 kg/m³ and a content of the bonding agent with respect to the fibre mass of the insulating element (4) in the form of a plate in the range of 4 to 7 % by wt. or, in the form of a wire mesh mat, in the range of 0.5 to 1 % by wt.

2. A duct as claimed in Claim 1, **characterised in that** the bonding agent is an organic bonding agent, such as phenol formaldehyde resin.

3. A duct as claimed in Claim 1 or 2, **characterised in that** the content of the bonding agent with respect to the fibre mass of the insulating element (4) in the form of a plate is in the range of 4 and 6 % by wt.

4. A duct as claimed in one of the preceding claims, **characterised in that** the gross density of the external lining is 20 to 40 kg/m³, preferably 30 kg/m³, with fire-resistance class L30 or the like, 60 to 80 kg/m³, preferably 70 kg/m³, with fire-resistance class L60 or the like and 90 to 120 kg/m³, preferably 110 kg/m³, with fire-resistance class L90 or the like.

5. A duct as claimed in one of the preceding claims, **characterised in that** the gross density of the internal lining (2) corresponds to at least a gross density of fire-resistance class L30 or the like and has a flow resistance with respect to its length in accordance with DIN EN ISO 9053 of > 15 kPas/m².

6. A duct as claimed in one of the preceding claims, **characterised in that** the insulating element (4) has a λ calculated value of ≤ 35 mW/mK.

7. A duct as claimed in one of the preceding claims, **characterised in that** the internal lining (2) is covered with an abrasion-resistant, acoustically transparent covering, such as a glass fleece or the like, and the external lining is covered with a diffusion-impervious covering, such as an aluminium film or the like.

8. A duct as claimed in one of the preceding claims, **characterised in that** the insulating element (4) has a melting point in accordance with DIN 4102, part 17 of ≥ 1000°C.

9. A duct as claimed in one of the preceding claims, **characterised in that** the mineral fibres of the insulating element (4) are manufactured by an inner centrifugal process in the centrifugal basket method with a temperature at the spinning basket of at least 1100°C.

10. A duct as claimed in one of the preceding claims, **characterised in that** the mineral fibres of the insulating element (4) correspond to the requirements of European Guideline 97/69/EG and/or the requirements of German Hazardous Substance Regulation para. IV, No. 22, as regards their solubility in a physiological medium.

11. A duct as claimed in one of the preceding claims, **characterised in that** for the purpose of packaging the insulating elements (4), they are compressible in the ratio of at least 1:2 up to a maximum gross density of 50 kg/m³ and, in particular, are compressible to a ratio of at least 1:3 up to a maximum gross density of 30 kg/m³.

12. An air-conditioning or ventilating duct as claimed in one of the preceding claims, **characterised in that** it is constituted as a self-supporting structure, which consists exclusively of plate-shaped insulating elements reinforced with bonding agent and have a covering (5) on their inner and outer surface.

13. A duct as claimed in Claim 12, **characterised in that** the inner and outer covering (5) is constituted by a diffusion-impervious lining, such as an aluminium film.

14. A duct as claimed in Claim 12 or 13, **characterised in that** the insulating elements (4) are connected together at their butt joints by means of notches to form a rectangular shape, e.g. a square.

15. An insulating element (4) for use as an internal and/or external lining (2, 3) in an air-conditioning or ventilating duct, **characterised in that** the composition of the mineral fibres of the insulating element (4) has an alkali/alkaline earth mass ratio of < 1 and that the fibre structure of the insulating element (4) is determined by a mean geometric fibre diameter ≤ 4 µm, a gross density in the range of 20 to 120 kg/m³ and a content of binding agent, with respect to the fibre mass of the insulating element (4) in the form of a plate, in the range of 4 to 7 % by wt. or, in the form of a wire mesh mat, in the range of 0.5 to 1 % by wt.

16. Insulating element as claimed in Claim 15, **characterised by** the following ranges of the chemical composition of the mineral fibres in % by wt.:
| | | | |
|---|---|---|---|
| SiO₂ | 39 - 55 % | preferably | 40 - 52 % |
| Al₂O₃ | 16 - 27 % | preferably | 16 - 26 % |
| CaO | 9.5 - 20 % | preferably | 10 - 18 % |
| MgO | 1 - 5 % | preferably | 1 - 4.9 % |
| Na₂O | 0 - 15 % | preferably | 2 - 12 % |
| K₂O | 0 - 15 % | preferably | 2 - 12 % |
| R₂O(Na₂O + K₂O) | 10 - 14.7 % | preferably | 10 - 13.5 % |
| P₂O₅ | 0 - 3 % | particularly | 0 - 2 % |
| Fe₂O₃ (total iron) | 1.5 - 15 % | particularly | 3.2 - 8 % |
| B₂O₃ | 0 - 2 % | preferably | 0 - 1 % |
| TiO₂ | 0 - 2 % | preferably | 0.4 - 1 % |
| Other | 0-2.0 % | | |

## Revendications

1. Conduit de climatisation ou de ventilation avec un revêtement interne et/ou externe (2,3) constitué chaque fois d'au moins un élément d'isolation (4) comportant en particulier une résistance à la température pour répondre aux exigences des catégories normatives de résistance au feu ou similaires en forme de plaque solidifiée avec un liant ou d'une natte de treillis de fils en fibres minérales solubles dans un milieu physiologique, le revêtement interne et/ou externe (2,3) étant constitué de plusieurs éléments d'isolation qui peuvent être disposés en au moins une couche dans la direction de l'axe longitudinal du conduit de climatisation ou de ventilation et peuvent être fixés sur celui-ci, **caractérisé en ce que** la composition des fibres minérales de l'élément d'isolation (4) présente un rapport de masse alcali/alcalinoterreux < 1, et **en ce que** la structure des fibres de l'élément d'isolation (4) est déterminée par un diamètre géométrique moyen des fibres ≤ 4 µm, par une masse volumique apparente dans la plage de 20 à 120 kg/m³ et par une proportion du liant rapportée à la masse des fibres de l'élément d'isolation (4) en forme de plaque dans la plage de 4 à 7 % en poids ou sous la forme d'une natte de treillis de fils dans la plage de 0,5 à 1 % en poids.

2. Conduit selon la revendication 1, **caractérisé en ce que** le liant est un liant organique tel que la résine phénol formaldéhyde.

3. Conduit selon les revendications 1 ou 2, **caractérisé en ce que** la part du liant rapportée à la masse des fibres de l'élément d'isolation (4) sous la forme d'une plaque se trouve dans la plage de 4 à 6 % en poids.

4. Conduit selon l'une des revendications précédentes, **caractérisé en ce que** la masse volumique apparente du revêtement externe est pour une catégorie de résistance au feu L30 ou similaire, de 20 à 40 kg/m³, de préférence 30 kg/m³, pour une catégorie de résistance au feu L60 ou similaire, de 60 à 80 kg/m³, de préférence 70 kg/m³, et pour une catégorie de résistance au feu L90 ou similaire, de 90 à 120 kg/m³, de préférence 110 kg/m³.

5. Conduit selon l'une des revendications précédentes, **caractérisé en ce que** la masse volumique apparente du revêtement interne (2) correspond à une masse volumique apparente de la catégorie de résistance au feu L30 ou similaire et présente une résistance linéique à l'écoulement selon DIN EN ISO 9053 > 15 kPas/m².

6. Conduit selon l'une des revendications précédentes, **caractérisé en ce que** l'élément d'isolation (4) présente une résistance caractéristique λ ≤ 35 mW/mK.

7. Conduit selon l'une des revendications précédentes, **caractérisé en ce que** le revêtement interne (2) est contrecollé à l'aide d'une garniture résistant à l'usure, acoustiquement transparente, telle qu'un mat de fibres de verre ou similaire et le revêtement externe est contrecollé à l'aide d'une garniture étanche à la diffusion telle qu'une feuille d'aluminium ou similaire.

8. Conduit selon l'une des revendications précédentes, **caractérisé en ce que** l'élément d'isolation (4) présente un point de fusion selon DIN 4102, partie 17 ≥ 1 000 °C.

9. Conduit selon l'une des revendications précédentes, **caractérisé en ce que** les fibres minérales de l'élément d'isolation (4) sont produites par une centrifugation interne dans un procédé à panier centrifuge à une température du panier centrifuge d'au moins 1 100 °C.

10. Conduit selon l'une des revendications précédentes, **caractérisé en ce que** les fibres minérales de l'élément d'isolation (4) relativement à leur solubilité dans un milieu physiologique répondent aux exigences de la directive européenne 97/69/CE et/ou aux exigences du décret allemand sur les matériaux dangereux Abs. IV N° 22.

11. Conduit selon l'une des revendications précédentes, **caractérisé en ce que** les éléments d'isolation (4), dans le but d'être emballés, peuvent être comprimés jusqu'à une masse volumique apparente maximale d'au moins 50 kg/m³ dans la proportion 1:2, en particulier jusqu'à une masse volumique apparente maximale d'au moins 30 kg/m³ dans la proportion 1:3.

12. Conduit de climatisation ou de ventilation, selon l'une des revendications précédentes, **caractérisé en ce que** celui-ci est formé de manière à être autoporteur uniquement à partir d'éléments d'isolation en forme de plaques solidifiées avec un liant, qui présentent un contrecollage (5) sur leurs faces internes et externes.

13. Conduit selon la revendication 12, **caractérisé en ce que** le contrecollage interne et externe (5) est formé d'une garniture étanche à la diffusion telle qu'une feuille d'aluminium ou similaire.

14. Conduit selon la revendication 12 ou 13, **caractérisé en ce que** les éléments d'isolation (4) sont liés les uns aux autres à leurs joints par des agrafes pour former un rectangle par exemple un carré.

15. Elément d'isolation (4) destiné à une utilisation comme revêtement interne et/ou externe (2,4) dans un conduit de climatisation ou de ventilation, **caractérisé en ce que** la composition des fibres minérales de l'élément d'isolation (4) présente un rapport de masse alcali/alcalinoterreux < 1, et **en ce que** la structure des fibres de l'élément d'isolation (4) est déterminée par un diamètre géométrique moyen des fibres ≤ 4 µm, par une masse volumique dans la plage de 20 à 120 kg/m³ et par une proportion du liant rapportée à la masse des fibres de l'élément d'isolation (4) en forme de plaque dans la plage de 4 à 7 % en poids ou sous la forme d'une natte de treillis de fils dans la plage de 0,5 à 1 % en poids.

16. Elément d'isolation selon la revendication 15, **caractérisé par** les gammes suivantes de la composition chimique des fibres minérales en % en poids:
| | | | |
|---|---|---|---|
| SiO₂ | 39 - 55 % | de préférence | 40 - 52 % |
| Al₂O₃ | 16 - 27 % | de préférence | 16 - 26 % |
| CaO | 9,5 - 20 % | de préférence | 10 - 18 % |
| MgO | 1 - 5 % | de préférence | 1 - 4,9 % |
| Na₂O | 0 -15 % | de préférence | 2 -12 % |
| K₂O | 0 - 15 % | de préférence | 2 - 12 % |
| R₂O (Na₂O+ K₂O) | 10 - 14,7 % | de préférence | 10 - 13,5 % |
| P₂O₅ | 0 - 3 % | notamment | 0 - 2 % |
| Fe₂O₃ (fer total) | 1,5 -15 % | notamment | 3,2 - 8 % |
| B₂O₃ | 0 - 2 % | de préférence | 0 - 1 % |
| TiO₂ | 0 - 2 % | de préférence | 0,4 - 1 % |
| Autres | 0 - 2,0 % | | |
